(19) Europäisches Patentamt
European Patent Office
Office européen des brevets

(11) Veröffentlichungsnummer: **0 214 470**
**B1**

(12) # EUROPÄISCHE PATENTSCHRIFT

(45) Veröffentlichungstag der Patentschrift: **28.11.90**

(51) Int. Cl.$^5$: **C 08 G 75/02**

(21) Anmeldenummer: **86110898.3**

(22) Anmeldetag: **06.08.86**

(54) **Verfahren zur Herstellung von Polyarylensulfiden.**

(30) Priorität: **17.08.85 DE 3529501**

(43) Veröffentlichungstag der Anmeldung:
**18.03.87 Patentblatt 87/12**

(45) Bekanntmachung des Hinweises auf die Patenterteilung:
**28.11.90 Patentblatt 90/48**

(84) Benannte Vertragsstaaten:
**BE DE FR GB IT**

(56) Entgegenhaltungen:
**EP-A-0 053 344**
**EP-A-0 100 536**
**US-A-3 386 950**
**US-A-3 870 686**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Ebert, Wolfgang, Dr.**
**Dörperhofstrasse 31**
**D-4150 Krefeld (DE)**
Erfinder: **Idel, Karsten, Dr.**
**Am Schwarzkamp 38**
**D-4150 Krefeld (DE)**

**EP 0 214 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von hochmolekularen, gegebenenfalls verzweigten Polyarylensulfiden aus Alkalisulfiden und Dihalogenaromaten in einem polaren Lösungsmittel in Gegenwart von 0,05 bis 5,0 mol-%, bevorzugt 0,1 bis 2,5 mol-% je einer Monohalogen- und einer Monomercaptoverbindung. Die so erhaltenen Polyarylensulfide mit definierten Schemlzviskositäten zeichnen sich durch eine hohe Stabilität der Schmelze und geringe Korrosion aus.

Polyarylensulfide und ihre Herstellung sind bekannt (z.B. US—PS 2 513 188, 3 117 620). Weiterhin ist aus der EP—A—53 344 bekannt, Polyphenylensulfide z.B. durch Einbau von Monohalogenaromaten zu stabilisieren.

So ist bekannt, daß die Zugabe von anorganischen oder organischen Salzen zum Umsetzungsgemisch zur Erniedrigung des Schmelzflusses bzw. zur Erhöhung der Schmelzviskosität der gewonnen Polyphenylensulfide führt. Erst bei ausreichend hoher Schmelzviskosität können Polyphenylensulfide thermoplastisch, z.B. zu Spritzsgußteilen, Folien und Fasern verarbeitet werden. Ohne Zugabe der obengenannten Salze werden Polyphenylensulfide gewonnen, die den notwendigen geringen Schmelzfluß erst über eine separate und zusätzliche Nachkondensation bzw. Härtung (Curing) erhalten.

Es ist bekannt, daß z.B. Alkalicarboxylate (DE—AS 2 453 749), Lithiumhalogenide oder Alkalicarboxylate (DE—OS 2 623 362), Lithiumchlorid oder Lithiumcarboxylat (DE—OS 2 623 363), Alkalicarbonate in Kombination mit Alkalicarboxylaten (US—PS 4 038 259), Lithiumacetate (DE—OS 2 623 333), Trialkyliphosphate (DE—OS 2 930 710), Trialkaliphosphonate (DE—OS 2 930 797), Alkalifluoride (DE—OS 3 019 732), Alkalisulfonate (US—PS 4 038 260), Lithiumcarbonat und Lithiumborat als Katalysatoren (US—PS 4 030 518) eingesetzt wurden.

In der DE—OS 3 120 538 werden außerdem Polyarylensulfide mit hohen Schmelzviskositäten durch Zugabe von N,N-Dialkylcarbonsäureamiden zum Umsetzungsgemisch erhalten.

Die Verwendung von polaren Lösungsmitteln für die Herstellung von Polyarylensulfiden ist dort ebenfalls beschrieben.

Es wurde nun gefunden, daß durch Zugabe bestimmter Monohalogen- und Monomercaptoverbindungen zum Reaktionsgemisch Polyarylensulfide erhalten wurden, die reproduzierbar einstellbare Schmelzviskositäten besitzen und sich durch eine hohe Stabilität der Schmelze und geringe Korrosion bei der Verarbeitung auszeichnen.

Gegenstand der Erfindung ist daher ein Verfahren zur Herstellung von gegebenenfalls verzweigten Polyarylensulfiden aus

a) 50 bis 100 mol-% Dihalogenaromaten der Formel

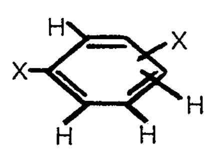

(I),

und 0 bis 50 mol-% Dihalogenaromaten der Formel

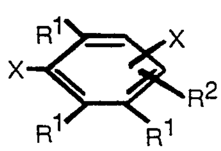

(II),

in denen

X für zueinander meta- und para-ständiges Halogen wie Chlor oder Brom steht und

$R^1$ und $R^2$ gleich oder verschieden ist und Wasserstoff, $C_1$—$C_4$-Alkyl, $C_5$—$C_{10}$-Cycloalkyl, $C_6$—$_{10}$-Aryl, $C_7$—$C_{10}$-Alkylaryl, $C_7$—$C_{14}$-Arylalkyl sein kann, wobei zwei zueinander orthosändige Reste $R^1$ zu einem aromatischen oder heterocyclischen, bis zu drei Heteroatomen wie N,O,S enthaltenden Ring verknüpft sein können und immer ein Rest $R^1$ verschieden von Wasserstoff ist

b) 0 bis 5 mol-%, bevorzugt 0,1 bis 2,5 mol-%, bezogen auf die Summe der Dihalogenaromaten der Formel I und II, eines Tri- oder Tetrahalogenaromaten der Formel (III)

$$ArX_n \qquad (III),$$

wobei

Ar ein aromatischer $C_6$—$C_{14}$-Rest oder ein heterocyclischer Rest mit 5 bis 14 Ringatomen ist, wobei bis zu 3 Ring-C-Atome durch Heteroatome wie N,O,S ersetzt sein können,

X für Halogen wie Chlor oder Brom steht und

n für die Zahl 3 oder 4 steht und

c) 50 bis 100 mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid und 0 bis 50 mol-% Alkalibisulfid, bevorzugt Natrium- und Kaliumhydrogensulfid, oder deren Mischung, wobei das molare Verhältnis von (a + b):c im Bereich von 0,75:1 bis 1,25:1 liegen kann, und

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch Monohalogenaromaten der Formel IV

$$W—A—R \qquad (IV),$$

in Mengen von 0,05 bis 5,0 mol-%, vorzugsweise 0,1 bis 2,5 mol-% zugegeben werden, wobei

W eine austauschbare Gruppe ist, ausgewählt aus der Gruppe Halogen wie Cl, Br, I, Mesylat oder Tosylat, vorzugsweise Cl, Br,

A ein aliphatischer, aromatischer oder heterocyclischer Rest mit 6 bis 30 C-Atomen ist, ausgewählt aus der Gruppe

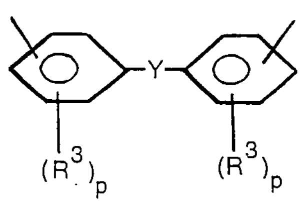 , 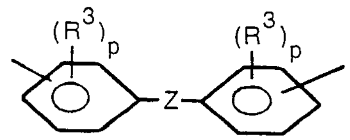 ,

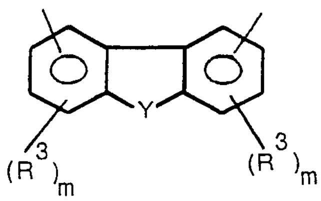 , 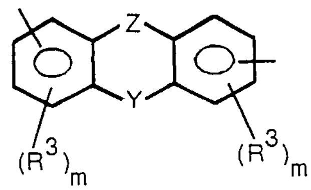

worin die Reste $R^3$ unabhängig voneinander $C_1$—$C_8$-Alkyl; $C_7$—$C_{19}$-Alkaryl/Aralkyl, $C_3$—$C_6$-Cycloalkyl oder Wasserstoff bedeuten und

Z CO, SO, —S—, —$SO_2$—, O oder eine chemische Einfachbindung darstellt und

Y O, $NR^3$, S, $SO_2$ oder CO bedeutet, weiterhin k, m und p ganze Zahlen sind und zwar

k für die Zahl 0, 1 oder 2

m für die Zahl 0, 1, 2 oder 3

p für die Zahl 0, 1, 2, 3 oder 4 steht

R die Bedeutung von $R^3$ hat, und einer Monomercaptoverbindung der Formel V

$$(R—A—S)_t—W \qquad (V),$$

die in Mengen von 0,05 mol-% bis 5,0 mol-% vorzugsweise 0,1 bis 2,5 mol-%, zugegeben werden, wobei

SW eine Mercapto- oder Mercaptid-Gruppe ist, in der

W für Wasserstoff, Li, Na, K oder $NH_4^+$ steht, wenn t = 1 ist, oder für Mg, Ca, Ba, Zn steht, bei t = 2 und

A ein aliphatischer, aromatischer oder heterocyclischer Rest mit 1 bis 30 C-Atomen ist, z.B.

$C_1-C_{18}$-Alkyliden, $-(CH_2)_p-$ 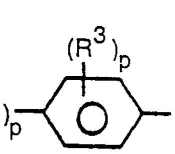 $-(CH_2)_p-$,

$C_5-C_{18}$-Cycloalkyliden,

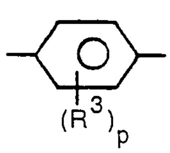 , 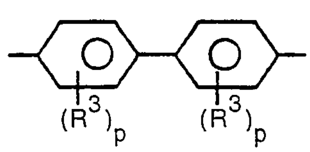 , 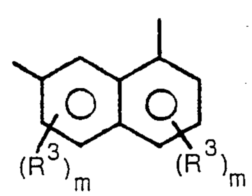 ,

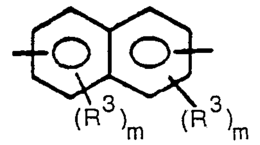 , 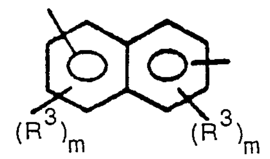 , 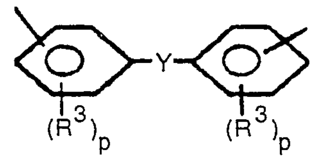 ,

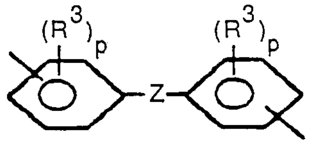 , 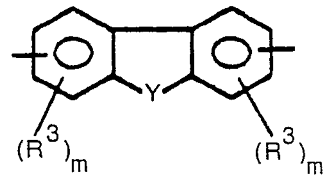 ,

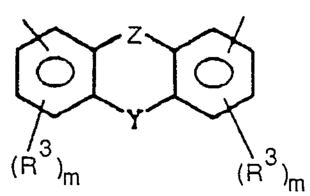 , 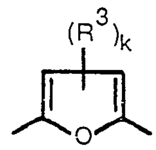 , 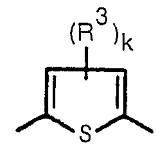 ,

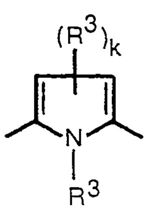 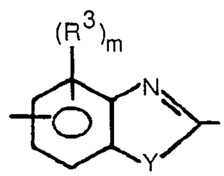 , 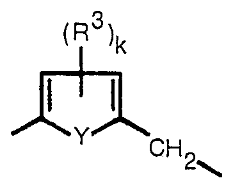

und

Z, Y, k, m, p und $R^3$ die bei Formel IV angegebene Bedeutung haben.

Die Alkalisulfide werden vorzugsweise in Form ihrer Hydrate und wäßrigen Mischungen oder wäßrigen Lösungen eingesetzt. Die Entwässerung kann partiell sein, erfolft aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und dann die Entwässerung des Gesamtgemisches durchgeführt werden. Das Alkalisulfid kann auch separat mit einem Teil der Reaktionskomponenten oder alleine entwässert werden.

In einer Ausführungsform der Reaktions werden die Reaktionspartner zusammen mit dem Reaktionsbeschleuniger bzw. einem Gemisch von Reakationsbeschleunigern in Anwesenheit des polaren Lösungsmittels kontinuierlich unter gleichzeitiger Entfernung des Wassers zusammengeführt. Bei dieser Verfahrenzweise kann eine einsetzende Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reakationszeit kann innerhalb einer weiten Spanne variiert werden. Sie kann von 1 bis 48 Stunden, bevorzugt 1 bis 18 Stunden betragen. Die Reaktionstemperaturen liegen zwischen 150 und 300°C, vorzugsweise zwischen 170 und 280°C.

Die Zugabe der Mercaptoverbindung V und der Monohalogenverbindung IV kann in verschiedener Art und Weise erfolgen. So kann z.B. die Monohalogenverbindung vorgelegt werden, während die Mercaptoverbindung zu einem bestimmten Zeitpunkt der Nachrührzeit zugesetzt wird, oder es kann umgekehrt verfahren werden. Ferner kann entweder die Mercaptoverbindung oder die Monohalogenverbindung vorgelegt werden, während die jeweils andere Verbindung während der Reaktions- oder Nachkondensationszeit kontinuierlich zudosiert wird; ferner können beide Verbindungen in bestimmten Zeiträumen der Reaktions- oder Nachrührphase zudosiert oder portionsweise zugegeben werden. In allen Fällen können sowohl definierte Verbindungen als auch Gemische aus verschiedenen Monohalogenverbindungen bzw. Gemische verschiedener Mercaptoverbindungen verwendet werden.

Die erfindungsgemäß hergestellten Polyarylensulfide zeichnen sich durch definierte Schmelzviskositäten aus, die innerhalb eines engen Bereiches reproduziert werden können. Das ist insofern von großer Bedeutung, als zur Verarbeitung der Polyarylensulfide Polymerschmelzen mit unterschiedlichem Fließverhalten eingestellt werden müssen, die dem jeweiligen Verwendungszweck angepaßt sein müssen.

So sind z.B. zur Herstellung von Folien und Fasern höhere Schmelzviskositäten als zur Einstellung von Glasfeser-bzw. Glasfaser/Mineral-verstärkten Spritzgußtypen notwendig.

Ein weiterer Vorteil der erfindungsgemäß hergestellten Polyarylensulfide ist ihre größere Stabilität bei thermischer Belastung. Nur so ist gewährleistet, daß kein weiterer Auf- oder Abbau bei der thermoplastischen Verarbeitung, der zur vollständigen Veränderung des Eigenschaftsbildes führen kann, eintritt. Außerdem kann das Regenerat nach der Verarbeitung wieder neu eingesetzt werden.

Bei der thermoplastischen Verarbeitung oder bei Kontakt von PPS-Schmelzen mit Metalloberflächen wird im allgemeinen Korrosion beobachtet, die zu Verunreinigungen des PPS und zum Verschleiß von Verarbeitungsmaschinen führt. Bei den erfindungsgemäß hergestellten Polyarylensulfiden ist erfreulicherweise auch bei hoher thermischer Belastung diese Korrosion reduziert.

Die Aufarbeitung des Umsetzungsgemisches und die Isolierung der Polyarylensulfide können un bekannter Weise erfolgen.

Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden erhalten werden.

Je nach Anteil an alkalihydrogensulfid, das als Verunreinigung im alkalisulfid in der Reaktionslösung enthalten ist, können zusätzlich bestimmte Anteile alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30:70 betragen.

Zur Erhaltung von thermoplastisch verarbeitbaren Polyphenylensulfiden werden bevorzugt p-Dihalogenaromaten eingesetzt.

Sollen verzweigte Polyarylensulfide hergestellt werden, sollten mindestens 0,05 mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindunggemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromocumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorobenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Generell kann jedes polare Lösungsmittel für die Reaktion eingeetzt werden, das eine ausreichende Löslichkeit der organischen und gegebenenfalls anorganischen Reaktanten unter den Reaktionsbedingungen gewährleistet. Bevorzugt werden N-Alkylactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielsweise finden als N-alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Erfindungsgemäß einsetzbare Monohalogenaromaten bzw. Heterocyclen sind beispielsweise

2-Chlordiphenylether, 4-Chlordiphenylether, 2-Bromdiphenylether, 4-Bromdiphenylether, 2-Chlordiphenylsulfid, 3-Chlordiphenylsulfid, 4-Chlordiphenylsulfid, 2-Bromdiphenylsulfid, 3-Bromdiphenylsulfid, 4-Bromdiphenylsulfid, 2-Chlordiphenylsulfoxid, 4-Chlordiphenylsulfixid, 2-Bromdiphenylsulfoxid, 4-Bromdiphenylsulfoxid, 2-Chlordiphenylsulfon, 3-Chlordiphenylsulfon, 4-Chlordiphenylsulfon, 2-Bromdiphenylsulfon, 3-Bromdiphenylsulfon, 4-Bromdiphenylsulfon, (3-Chlorphenyl)phenylketon, (4-Chlorphenyl)phenylketon, (3-Bromphenyl)phenylketon, (4-Bromphenyl)phenylketon.

Vorzugsweise werden verwendet: 3-Chlordiphenylsulfid, 3-Bromdiphenylsulfid, 4-Chlordiphenylsulfid, 4-Bromdiphenylsulfid, 3-Chlordiphenylsulfon, 3-Bromdiphenylsulfon, 4-Chlordiphenylsulfon, 4-Bromdiphenylsulfon, 3-Chlordiphenylketon, (3-Bromphenyl)phenylketon, (4-Chlorphenyl)phenylketon, (4-Bromphenyl)phenylketon.

Erfindungsgemäß einstzbare Monomercaptoverbindungen sind beispielsweise:

Butylmercaptan, Dodecylmercaptan, Stearylmercaptan, Benzylmercaptan, Thiophenyl, 1-Mercaptonaphthalin, 2-Mercaptonaphthalin, 4-Mercaptodiphenyl, 4-Mercaptodiphenylether, 4-Mercaptodiphenylsulfon, 4-Mercaptodiphenylsulfid, 4-Mercaptodiphenylketon, 2-Mercaptobenzoxazol, 2-Mercaptobenzthiazol, 2-Mercaptobenzimidazol nebst deren Li-, Na-, K-, $NH_4$-, Ca-, Ma- oder Zn-Mercaptiden.

Vorzugsweise werden eingesetzt Dodecylmercaptan, Stearylmercaptan, Benzylmercaptan, Thiophenol, 2-Mercaptobenzimidazol, 2-Mercaptobenzthiazol, Na-Stearylmercaptid, Nathiophenolat, Na-2-Mercaptobenzimidazol, Na-2-Mercaptobenzthiazol, Zn-Salze des 2-Mercaptobenzimidazols und des 2-Mercaptobenzthiazols.

Die Reaktion kann gegebenenfalls zusätzlich in Anwesenheit von üblichen Reaktionsbeschleunigern wie z.B.:

Alkalicarboxylaten (DE—AS 2 453 749), Lithiumhalogeniden oder Alkalicarboxylaten (DE—OS 2 623 362), Lithiumchlorid oder Lithiumcarboxylat (DE—OS 2 623 363), Alkalicarbonaten in Kombination mit Alkalicarboxylaten (US—PS 4 038 259), Lithiumacetat (DE-OS 2 623 333), Trialkaliphosphaten (DE—OS 2 930 710), Trialkaliphosphonaten (DE—OS 2 930 797), Alkalifluoriden (DE—OS 3 019 732), Alkalisulfonaten (US—PS 4 038 260), Lithiumcarbonat und Lithiumborat (US—PS 4 030 518), Aminosäuren (Le A 23 256), Definierten Mengen Lactam (Le A 23 080), Anhydriden und Estern von Carbonsäuren (Le A 23 079) und N,N-Dialkylcarbonsäureamiden durchgeführt wurden.

Die erfindungsgemäßen Polyarylensulfide können mit anderen Polymeren, wie Pigmenten und Füllstoffen — beispielsweise Graphit, Metallpulver, Glaspulver, Quarzmehl, Glasfasern oder Kohlefasern — gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238—70 bei 316°C unter Verwendung eines 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta m$ der Polymerschmelze (in Pa.s) bei 306°C in Abhängigkeit von der Schubspannung (in Pa) mit Hilfe des Instron-Rotationsviskosimeters bestimmt.

Man kann auf diese Weise die Schmelzviskosität in einem sehr weitern Bereich von $10^{-1}$ bis $20^7$ Pa.s bestimmen. In dem Instron-Rheometer wird das Polymer zwischen einer festen Platte und einem drehbaren Kegel geschmolzen und das Drehmoment des Kegels bestimt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron, Durchmesser des Kegels und der Platte 2 cm. Angegeben wird die Schmelzviskosität, die bei einer Schubspannung von $\tau = 10^2$ Pa gemessen wird.

Die erfindungsgermäßen Polyarylensulfide besitzen nach der Isolierung aus dem Reaktionsgemisch Schmelzviskositäten zwischen 1 und $5 \times 10^3$, vorzugsweise 5 bis $1 \times 10^3$ Pa.s. Sie können in der üblichen Weise verabeitet werden. Erhalten werden dabei Folien, Fasern und vorzugsweise Spritzgießmassen. Diese können Verwendung finden z.B. als Automobilteile, Armaturen, Elektroteile, z.B. Schalter, elektronische Tafeln, chemikalienresistente und witterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc.

Polyarylensulfide können über chromatographische Verfahren analysiert werden, um Aussagen über Molekulargewicht und Molekulargewichtsverteilung zu machen.

Hierfür sind z.B. Hochydruckflüssigkeitschromatographie (HPLC) oder Gelpermeationschromatographie (GPC) geeignet.

Als stationäre Phase können übliche Trägermaterialien verwendet werden, z.B. Li-Chroprep®, Lobar®, LiChrosorb®, LiChrospher®, Perisorb®, Hibar®, Fractogel®, Fractosil®, Ultrastyragel®, Microstyragel®, Zorbax®, Bondagel®, und Shodex®.

Als Lösungsmittel und Laufmittel können übliche Lösungsmittel verwendet werden. Diese sollten das Polymere ausreichend lösen.

Z.B. sind 1-Chlornaphthalin, Diphenyl, N-Methylpyrrolidon, N-Cyclohexylpyrrolidon, N-Methylpiperidon, N-Methylcaprolactam, N-Methyllaurinlactam, Sulfolan, N,N'-Dimethylimidazolidinon, N,N'-Dimethylpiperazinon, Hexamethylphosphorsäuretriamid, 1-Methyl-1-oxo-phospholan und deren Mischungen geeignet.

Bei den chromatographischen Analysenmethoden können absolute oder relative Eichungen durchgeführt werden. Als Eichsubstanzen für relative Eichungen eignen sich beispielsweise übliche

Polymere wie z.B. Polystyrol, Polyethylen, Polyethylenterephthalat, Polybutylenterephthalat, Polyester, wie rein aromatische Polyester, Polycarbonat, Polyamide, wie PA 6, PA 66, PA 11, Polysulfone oder Polyethersulfone.

Die Chromatographie zur analytischen Bestimmung der Molekulargewichte bzw. Molekulargewichtsverteilung kann bei verschiedenen Drücken von 1 bis 10 bar durchgeführt werden.

Die chromatographische Bestimmung wird bei einer Temperatur von Raumtemperatur bis 250°C durchgeführt.

Weiterhin können zur Verbesserung der Meßgenauigkeit der zu analysierenden Probe Substanzen wie Alkalihalogenide, Erdalkalicarboxylate, Phosphonium- oder ammoniumverbindungen zugesetzt werden.

Bei der Auswertung der so ermittelten Analysendaten können die gewichtsgemittelten Molekulargewichte $M_w$ angegeben werden. Diese betragen 15.000 bis 150.000, vorzugsweise 15.000 bis 100.000, besonders bevorzugt 15.000 bis 80.000.

Beispiele

Beispiel 1

Dieses Beispiel beschreibt zum Vergleich die Herstellung von Polyphenylensulfid gemäß US—PS 3 354 129, wobei zur Erhöhung der Schmelzviskosität 1,2,4-Trichlorbenzol als Verzweiger zudosiert wird.

In einem mit Rührern ausgerüsteten Autoklaven wurden 129 g Natriumsulfid-tri-hydrat (entsprechend 1 mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (=1 mol) und 1,81 g 1,2,4-Trichlorbenzol (1 mol-%, bezogen auf mol p-Dichlorbenzol) in ca. 50 g N-Methyl-2-pyrrolidon hinzugefügt. Man erwärmt das Reaktionsgemisch unter dem Stickstoffvordruck von 2,5 bar in 30 min auf 245°C, wobei der Druck auf 10 bar ansteigt und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80°C in Vakuum und erhält 100,3 g (93%) Poly-p-phenylensulfid mit einer Schmelzviskosität von 20 Pa.s (gemessen bei $10^2$ Pa und 306°C).

Beispiel 1a, b, c

Der Versuch von Beispiel 1 wird dreimal wiederholt und jeweils die Schmelzviskosität nach Aufarbeitung bestimmt:

a) $\eta_m$ = 13 Pa.s
b) $\eta_m$ = 6 Pa.s
c) $\eta_m$ = 27 Pa.s

Beigleichbleibenden Versuchsbedingungen ergeben sich schwankende Schmelzviskositätswerte.

Beispiel 2

Zu 2.100 g N-Methylcaprolactam, 940,8 g p-Dichlorbenzol und 8,08 g (0,5 mol-%) 4-Chlordiphenylsulfon wurden

856,75 g Natriumsulfidhydrat (ca. 60%ig)
135 g Natronlauge und
108 g Caprolactam

bei einer Temperatur von 220°C zudosiert.

Die Zudosierrate richtet sich nach dem Umsatz und wird so eingestellt, daß die Temperatur von 220°C bei gleichzeitiger zusätslicher Beheizung des Reaktionsgefäßes eingehalten werden kann. Bei der Dosierung wird gleichzeitig das Wasser aus der Reaktion entfernt.

Nach der Dosierung hält man die Reaktion weitere 4 Stunden auf Rückfluß und dosiert dann 1,76 g (0,25 mol-%) Thiophenol in 50 ml N-Methylcaprolactam hinzu. Nach weiteren 3 Stunden Reaktionszeit wird das PPS in Wasser ausgefällt, elektrolytfrei gewaschen und mit einem organischen Lösungsmittel kurz extrahiert. Das getrocknete p-Polyphenylensulfid hat eine Schmelzviskosität von 41 Pa.s (gemessen bei $10^2$ Pa und 306°C).

Beispiel 3 (Vergleich)

Wie Beispiel 2, jedoch ohne 4-Chlordiphenylsulfon und ohne Thiophenol. Es wird eine Schmelzviskosität $\eta_m$ = 680 Pa.s (gemessen bei $\tau = 10^2$ Pa und 306°C) erreicht. Dieses Polyphenylensulfid läßt sich in Anwesenheit größerer Mengen mineralischer Füllstoffe oder Glasfasern aufgrund reduziert Fließfähigkeit nur schwer verarbeiten.

Beispiel 4

Wie Beispiel 2; jedoch wird das Thiophenol bereits nach 2 Stunden 30 min zudosiert. Das erhaltene p-Polyphenylensulfid hat eine Schmelzviskosität von 34 Pa.s (gemessen bei $10^2$ Pa und 306°C).

Beispiel 5

Wie Beispiel 2, jedoch mit Methyloxophospholan als Lösungsmittel. Es wird ein p-Polyphenylensulfid mit einer Schmelzviskosität von 37 Pa.s (gemessen bei $10^2$ Pa und 306°C) erhalten.

Beispiel 6

Wie Beispiel 4; jedoch werden 12,1 g (0,75 mol-%) 4-Chlordiphenylsulfon vorgelegt und 1,76 g (0,25 mol-%) Thiophenol in 50 ml NMC nach 2 Stunden Nachrührzeit zugegeben. Es wird eine Schmelzviskosität von 18 Pa.s (gemessen bei $10^2$ Pa und 306°C) erhalten. Eine dreimalige Weiderholung dieses Versuchs unter gleichen Bedingungen ergibt bei guter Reproduzierbarkeit die Schmelzviskositäten a) $\eta_m$ = 17 Pa.s, b) $\eta_m$ = 20 Pa.s und c) $\eta_m$ = 18 Pa.s.

Beispiel 7

Wie Beispiel 2; jedoch werden nach 4 Stunden Nachkondensationszeit 5,32 g (0,5 mol-%) 2-Mercaptobenzthiazol in 50 ml NMC eingetropft. Das nach der Aufbeitung erhaltene Polyphenylensulfid hat eine Schmelzviskosität von $^{\oplus}m$ = 36 Pa.s (bei $\tau = 10^2$ Pa und 306°C).

Beispiel 8

Wie Beispiel 2; jedoch werden 2,66 g (0,25 mol-%) 2-Mercaptobenzimidazol vorgelegt und 8,08 g (0,5 mol-%) 4-Chlordiphenylsulfon in 50 ml NMC nach 2 Stunden Nachrührzeit zugesetzt. Das so erhaltene Polyphenylensulfid hat eine Schmelzenviskosität von $^{\oplus}m$ = 58 Pa.s (bei $\tau = 10^2$ Pa und 306°C).

Korrosion

Die Korrosion wurde durch Titration saurer Ausgasungen der entsprechenden Polyphenylensulfidproben im Luftstrom bei 350°C in 1 Stunde bestimmt. Der Korrosionsfaktor f =

$$\frac{\text{Korrosion des entsprechenden Beispiels}}{\text{Korrosion des Vergleichsbeispiels 1}}$$

| Beispiel | f |
|---|---|
| 2 | 0,88 |
| 4 | 0,91 |
| 5 | 0,93 |
| 6 | 0,87 |
| 7 | 0,92 |
| 8 | 0,89 |

**Patentansprüche**

1. Verfahren zur Herstellung von hochmolekularen, gegebenenfalls verzweigten Polyarylensulfiden aus

a) 50 bis 100 mol-% Dihalogenaromaten der Formel

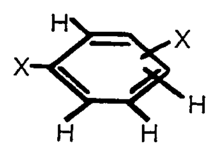

(I),

und 0 bis 50 mol-% Dihalogenaromaten der Formel

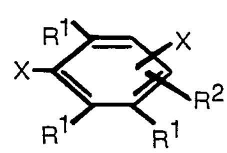

(II),

worin

X für zueinander meta- und para-ständiges Halogen wie Chlor oder Brom steht und

$R^1$ und $R^2$ gleich oder verschieden ist und Wasserstoff, $C_1$—$C_4$-Alkyl, $C_5$—$C_{10}$-Cycloalkyl, $C_6$—$_{10}$-Aryl, $C_7$—$C_{10}$-Alkylaryl, $C_7$—$C_{14}$-Arylalkyl sein kann, wobei zwei zueinander orthosändige Reste $R^1$ zu einem aromatischen oder heterocyclischen, bis zu drei Heteroatomen wie N,O,S enthaltenden Ring verknüpft sein können und immer ein Rest $R^1$ verschieden von Wasserstoff ist

b) 0 bis 5 mol-%, bevorzugt 0,1 bis 2,5 mol-%, bezogen auf die Summe der Dihalogenaromaten der Formel I und II, eines Tri- oder Tetrahalogenaromaten der Formel

$$ArX_n \quad (III),$$

wobei

Ar ein aromatischer $C_6$—$C_{14}$-Rest oder ein heterocyclischer Rest mit 5 bis 14 Ringatomen ist, wobei bis zu 3 Ring-C-Atome durch Heteroatome wie N,O,S ersetzt sein können,

X für Halogen wie Chlor oder Brom steht und

n für die Zahl 3 oder 4 steht und

c) 50 bis 100 mol-% Alkalisulfid, z.B. in Form ihrer Hydrate oder wäßrigen Mischungen, gegebenenfalls zusammen mit geringen Mengen Alkalihydroxiden wie Natrium- und Kaliumhydroxid und 0 bis 50 mol-% Alkalibisulfid, bevorzugt Natrium- und Kaliumhydrogensulfid, oder deren Mischung, wobei das molare Verhältnis von (a + b):c im Bereich von 0,75:1 bis 1,25:1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch Monohalogenaromaten der Formel IV

$$W—A—R \qquad (IV),$$

in Mengen von 0,05 bis 5,0 mol-%, zugegeben werden, wobei

W eine austauschbare Gruppe ist, ausgewählt aus der Gruppe Halogen wie Cl, Br, I, Mesylat oder Tosylat, vorzugsweise Cl, Br,

A ein aliphatischer, aromatischer oder heterocyclischer Rest mit 6 bis 30 C-Atomen ist, ausgewählt aus der Gruppe

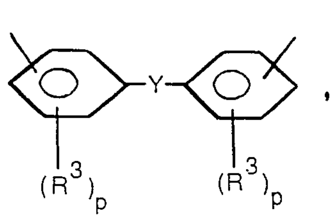 , 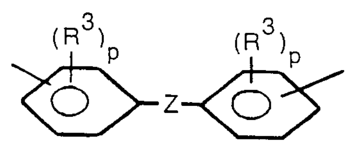 ,

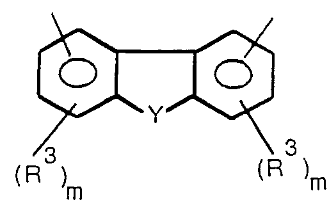 , 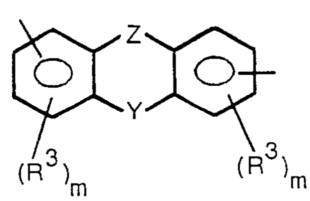

ist,

worin die Reste $R^3$ unabhängig voneinander $C_1$—$C_8$-Alkyl $C_7$—$C_{19}$-Alkaryl/Aralkyl $C_3$—$C_6$-Cycloalkyl oder Wasserstoff sind, wahrend

Z = S, CO,

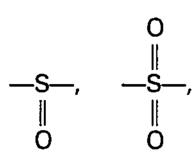 O,

oder eine chemische Einfachbindung darstellt,

Y O, $NR^3$, S, $SO_2$ oder CO bedeutet,

k, m und p ganze Zahlen sind und zwar

k für die Zahl 0, 1 oder 2

m für die Zahl 0, 1, 2 oder 3

p für die Zahl 0, 1, 2, 3 oder 4 steht

R die bei Formel (IV) genannte Bedeutung von $R^3$ hat, sowie einer Monomercaptoverbindung der allgemeinen Formel V

$$(R—A—S)_t—W \qquad (V),$$

die in Mengen von 0,05 mol-% bis 5,0 mol-%, zugegeben werden, wobei

SW eine Mercapto- oder Mercaptid-Gruppe ist, in der

W für Wasserstoff, Li, Na, K oder $NH_4^+$ steht, wenn t = 1 ist, oder für Mg, Ca, Ba, Zn steht, bei t = 2 außerdem

A ein aliphatischer, aromatischer oder heterocyclischer Rest mit 1 bis 30 C-Atomen ist, z.B.

$C_1-C_{18}$-Alkyliden, $-(CH_2)_p-$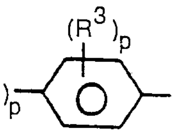$-(CH_2)_p-$,
$C_5-C_{18}$-Cycloalkyliden,

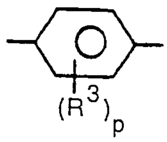 , 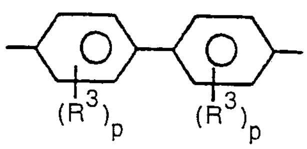 , 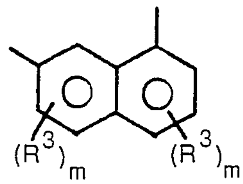 ,

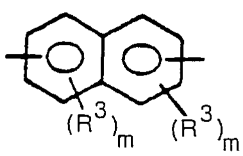 , 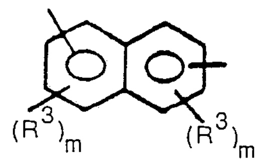 , 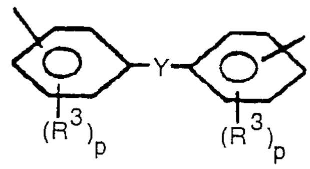 ,

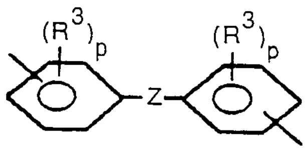 , 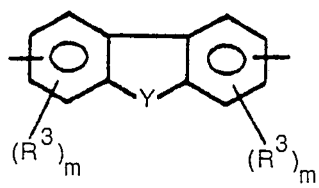 ,

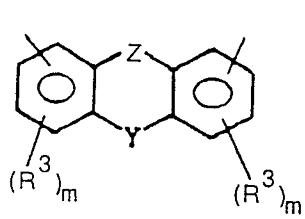 , 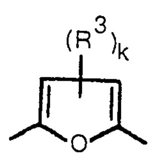 , 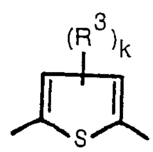 ,

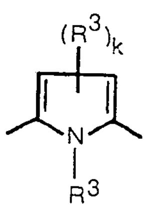 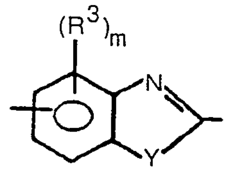 , 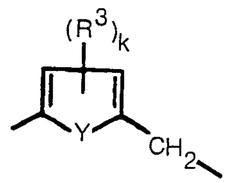

worin

Z, Y, k, m, p und $R^3$ die unter Formel IV angegebene Bedeutung haben.

2. Verfahren nach Anspruch 1, dadurch gekennzeichnet, daß 0, bis 2,5 mol% Monohalogenaromaten der formel IV und 0,1 bis 2,5 mol% der Thiolverbindung der Formel V eingesetzt werden.

3. Verfahren nach Anspruch 1, dadurch gekennzeichnet, daß die Reaktionspartner und das polare Lösungsmittel einzeln oder in Mischungen bzw. Lösungen bei Temperaturen ≥200°C unter gleichzeitiger Entwässerung zusammengeführt und zur Reaktion gebracht werden.

4. Verfahren nach Anspruch 1, dadurch gekennzeichnet, daß die Reaktion in Abwesenheit von Wasser durchgefürt wird.

5. Verfahren nach Anspruch 1, dadurch gekennzeichnet, daß 0,05 bis 2,5 mol-% Monohalogenaromaten der Formel IV und 0,05 bis 1,5 mol-% der Thiolverbindung der Formel V eingesetzt werden.

6. Verfahren nach Anspruch 1, dadurch gekennzeichnet, daß der Monohalogenaromat 4-Chlordiphenylsulfon und die Mercaptoverbindung der Formel V 2-Mercaptobenzimidazol oder 2-Mercaptobenzthiazol ist.

7. Verfahren nach Anspruch 1, dadurch gekennzeichnet, daß der Monohalogenaromat IV 4-Chlordiphenylsulfon und die Thiolverbindung V Thiophenol ist.

**Revendications**

1. Procédé pour la préparation de sulfures de polyarylène à haut poids moléculaire éventuellement ramifiés, constitué par

a) 50 à 100 moles % des composés aromatiques dihalogénés de formule (I)

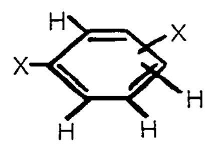

(I),

et 0 à 50 moles % des composés aromatiques dihalogénés de formule (II)

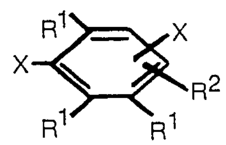

(II),

dans lesquelles

X représente des atomes d'halogène se trouvant aux positions méta et para, tels que le chlore ou le brome et

$R^1$ et $R^2$ sont identiques ou différents et peuvent représenter un atome d'hydrogène, un groupe alkyle en $C_1$—$C_4$, un groupe cycloalkyle en $C_5$—$C_{10}$, un groupe aryle en $C_6$—$C_{10}$, un groupe alkylaryle en $C_7$—$C_{10}$, un groupe arylalkyle en $C_7$—$C_{14}$, deux radicaux $R^1$ se trouvant en position mutuelle ortho peuvent être reliés en un noyau aromatique ou hétérocyclique contenant jusqu'à trois hétéroatomes, tels que N, O, S, un radical $R^1$ étant toujours différent d'un atome d'hydrogène, et

b) 0 à 5 moles %, de préférence 0, à 2,5 moles % rapporté sur la somme des composés aromatiques dihalogénés de formule (I) et (II), d'un composé aromatique tri- ou tétrahalogéné de formule (III)

$$ArX_n \quad \text{(III)}$$

dans laquelle

Ar représente un radical aromatique en $C_6$—$C_{14}$ ou un radical hétérocyclique contenant 5 à 14 atomes cycliques, 3 atomes de carbone cyclique au plus pouvant être remplacés par des hétéroatomes tels que N, O, S,

X représente un atome d'halogène tel que le chlore ou le brome

n représente 3 ou 4,

c) 50 à 100 moles % de sulfure de métal alcalin, par exemple, sous forme de leurs hydrates ou de leurs mélanges aqueux etè éventuellement conjointement avec des quantités minimes d'hydroxyde de métaux alcalins, tels que l'hydroxyde de sodium et l'hydroxyde de potassium, et 0 à 50 moles % de bisulfure de métal alcalin, de préférence, l'hydrogénosulfure de sodium et de potassium ou de leurs mélanges, le rapport molaire de (a + b):c pouvant se situer dans de domaine de 0,75:1 à 1,25:1,

d) éventuellement en présence d'activateurs réactionnels tels que des carboxylates de métaux alcalins, des phosphates de métaux alcalins, des phosphonates de métaux alcalins, des fluorures de métaux alcalins, des alkylsulfonates de métaux alcalins ou en présence d'amides d'acides N,N dialkylcarboxyliques, de lactames, d'anhydrides et d'esters d'acides carboxyliques, caractérisé en ce qu'au mélange réactionnel on ajoute des composés aromatiques monohalogénés de formule (IV)

$$W—A—R \quad \text{(IV)}$$

en quantités de 0,05 à 5,0 moles %, dans laquelle

W représente un groupe remplaçable choisi parmi le groupe des halogènes tels que Cl, Br, I, un groupe mésylate ou un groupe tosylate, de préférence, Cl, Br,

A représente un radical aliphatique, aromatique ou hétérocyclique contenant 6 à 30 atomes de carbone, choisi parmi le groupe

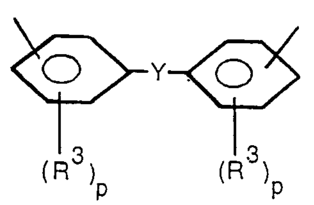 , 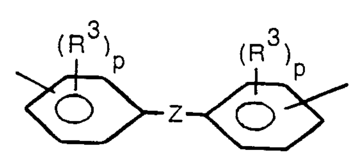 ,

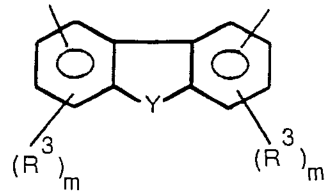, 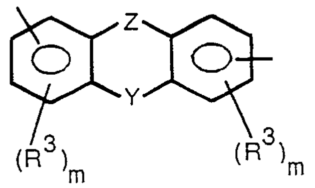.

dans lesquelles les radicaux $R^3$ représentent indépendamment l'un de l'autre un groupe alkyle en $C_1$—$C_8$, un groupe aryle/aralkyle en $C_7$—$C_{19}$, un groupe cycloalkyle en $C_3$—$C_6$ ou un atome d'hydrogène et

Z représente S, CO,

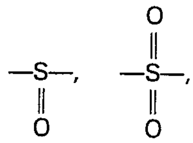 O

ou une liaison simple chimique et

Y représente O, $NR^3$, S, $SO_2$ ou CO;

k, m et p représente des entiers, à savoir

k représente le nombre 0, 1 ou 2

m représente le nombre 0, 1, 2 ou 3

p représente le nombre 0, 1, 2, 3 ou 4

R a la signification de $R^3$ mentionnée dans la formule (IV), ainsi qu'un composé monomercapto de formule V

$$(R—A—S)_t—W \qquad (V)$$

que l'on ajoute en des quantités de 0,05 moles % à 5,0 moles %, dans lequel

SW représente un groupe mercapto ou mercaptide, où

W représente un atome d'hydrogène, Li, Na, K ou $NH_4^+$ lorsque t = 1 ou représente Mg, Ca, Ba, Zn dans le cas où t = 2 et, en outre,

A représente un radical aliphatique aromatique ou hétérocyclique contenant 1 à 30 atomes de carbone, par exemple, un groupe alkylidène en $C_1$—$C_{18}$, un groupe cycloalkylidène en $C_5$—$C_{18}$

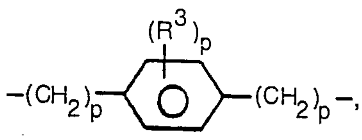,

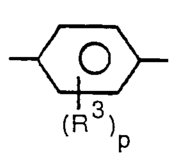, 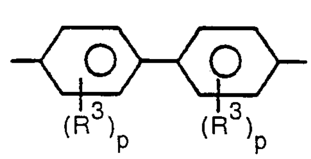, 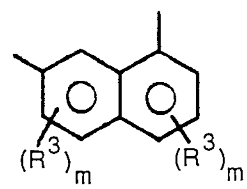,

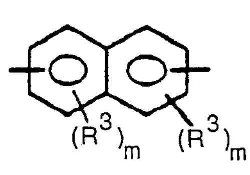, 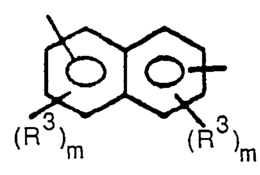, 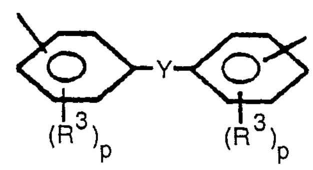,

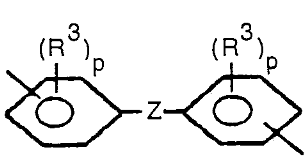, 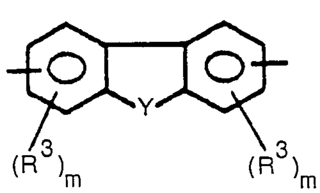,

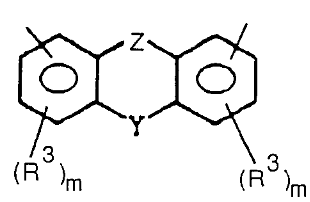 , 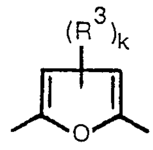 , 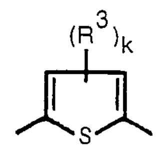 ,

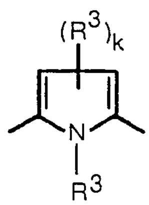 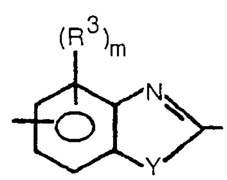 , 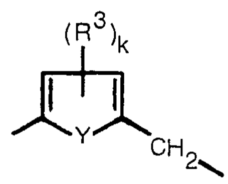

dans lesquelles,

Z, Y, k, m, p et $R^3$ ont les significations indiquées pour la formule IV.

2. Procédé selon la revendication 1, caractérisé en ce que l'on met en oeuvre 0,1 a 2,5 moles % des composés aromatiques monohalogénés de formule IV et 0, 1 à 2,5 moles % du composé thiol de formule V.

3. Procédé selon la revendication 1, caractérisé en ce que l'on rassemble les partenaires réactionnels et le solvant polaire séparément ou en mélange ou encore en solution, à des températures de ≥ 200°C, en procédant à une déshydration simultanée, et on les fait réagir.

4. Procédé selon la revendication 1, caractérisé en ce que l'on effectue la réaction en l'absence d'eau.

5. Procédé selon la revendication 1, caractérisé en ce que l'on met en oeuvre 0,05 à 2,5 moles % des composés aromatiques monohalogénés de formule IV et 0,05 à 1,5 mole % du composé thiol de formule V.

6. Procédé selon la revendication 1, caractérisé en ce que le composé aromatique monohalogéné est la 4-chlorodiphénylsulfone et le composé mercapto de la formule V est le 2-mercaptobenzimidazole ou le 2-mercaptobenzothiazole.

7. Procédé selon la revendication 1, caractérisé en ce que l'on le composé aromatique monohalogéné est la 4-chlorodiphénylsulfone et le composé thiol V est le thiophénol.

8. Procédé selon la revendication 1, caractérisé en ce que le composé aromatique monohalogéné IV est la 4-chlorodiphénylsulfone et le composé thiol V est le dodécylmercaptan.

9. Procédé selon la revendication 1, caractérisé en ce que, comme solvant polaire, on met en oeuvre le N-méthyl-caprolactame.

**Claims**

1. A process for the production of high molecular weight, optionally branched polyarylene sulfides from

a) 50 to 100 mol-% aromatic dihalogen compounds corresponding to the formula

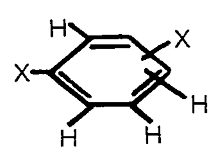

(I),

and 0 to 50 mol-% aromatic dihalogen compounds corresponding to the formula

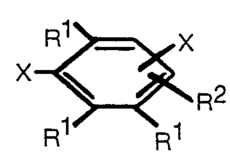

(II),

in which

the X's represent halogens, such as chlorine or bromine, in the meta- or para-position to one another and

$R^1$ and $R^2$ may be the same or different and represent hydrogen, $C_{1-4}$ alkyl, $C_{5-10}$ cycloalkyl, $C_{6-10}$ aryl, $C_{7-10}$ alkylaryl, $C_{7-14}$ arylalkyl; two substituents $R^1$ in the ortho position to one another may be attached to form an aromatic or heterocyclic ring containing up to three hetero atoms, such as N, O, S and one

substituent $R^1$ is always different from hydrogen and

b) 0 to 5 mol-% and preferably 0.1 to 2.5 mol-%, based on the sum of the aromatic dihalogen compounds corresponding to formula I and II, of an aromatic tri- or tetrahalogen compound corresponding to the formula

$$ArX_n \qquad (III)$$

in which

Ar is an aromatic $C_{6-14}$ radical or a heterocyclic radical containing 5 to 14 ring atoms, up to 3 ring C atoms being replaceable by hetero atoms, such as N, O, S,

X represents halogen, such as chlorine or bromine, and

n is the number 3 or 4 and

c) 50 to 100 mol-% alkali sulfide, for example in the form of the hydrates or aqueous mixtures, optionally together with small quantities of alkali hydroxides, such as sodium and potassium hydroxide, and 0 to 50 mol-% alkali bisulfide, preferably sodium and potassium hydrogen sulfide, or mixtures thereof, the molar ratio of (a+b):c being from 0.75:1 to 1.25:1,

d) optionally in the presence of reaction accelerators, such as alkali carboxylates, alkali phosphates, alkali phosphonates, alkali fluorides, alkali alkyl sulfonates, and in the presence of N,N-dialkyl carboxylic acid amides, lactams, anhydrides and esters of carboxylic acids, characterized in the aromatic monohalogen compounds corresponding to the formula

$$W—A—R \qquad (IV)$$

are added to the reaction mixture in quantities of 0.05 to 5.0 mol-%; in formula (IV),

W is an exchangeable group selected from the group consisting of halogen, such as Cl, Br, I, mesylate or tosylate, preferably Cl and Br,

A is an aliphatic, aromatic or heterocyclic radical containing 6 to 30 C atoms selected from the group

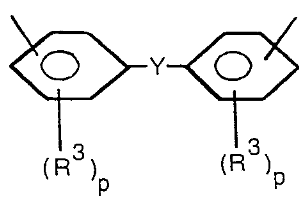 , 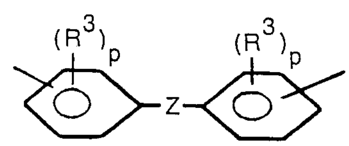 ,

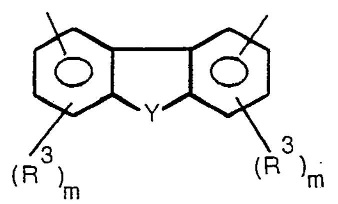 , 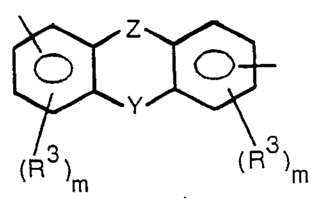

where the substituents $R^3$ independently of one another are $C_{1-8}$ alkyl, $C_{7-19}$ alkaryl/aralkyl, $C_{3-5}$ cycloalkyl or hydrogen,

Z is S, CO,

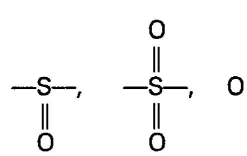

or a chemical single bond,

Y is O, $NR^3$, S, $SO_2$ or CO,

k, m and p are integers of which

k is the number 0, 1, 2,

m is the number 0, 1, 2, 3 and

p is the number 0, 1, 2, 3, 4 and

R has the meanings defined for $R^3$ in formula (IV), and a monomercapto compound corresponding to the following general formula

$$(R—A—S)_t—W \qquad (V)$$

is added to the reaction mixture in quantities of 0.05 mol-% to 5.0 mol-%; in formula (V),

SW is a mercapto or mercaptile group where

W is hydrogen, Li, Na, K or $NH_4^+$ where t = 1 or is Mg, Ca, Ba, Zn where t = 2;

A is an aliphatic, aromatic or heterocyclic radical containing 1 to 30 C atoms,.for example $C_{1-18}$ alkylidene, $C_{5-18}$ cycloalkylidene

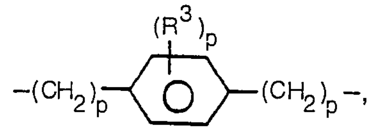

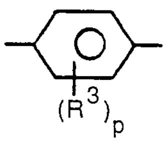 , 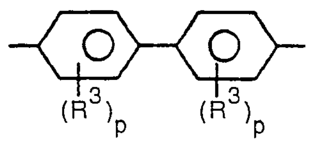 , 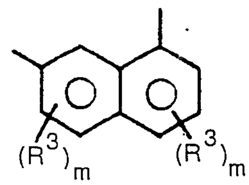 ,

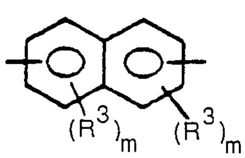 , 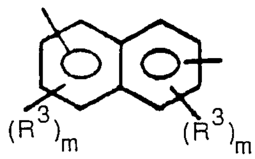 , 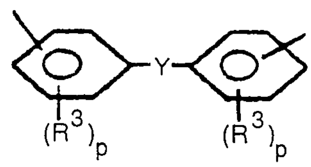 ,

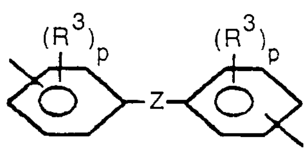 , 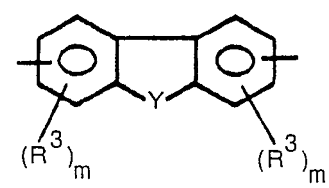 ,

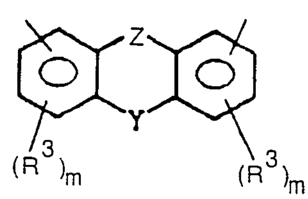 , 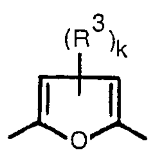 , 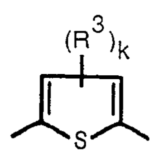 ,

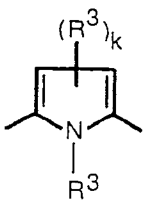 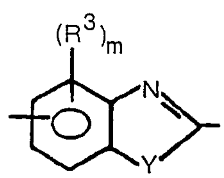 , 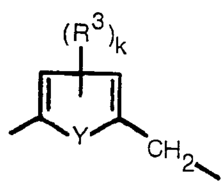

in which Z, Y, k, m, p and $R^3$ are as defined for formula (IV).

2. A process as claimed in claim 1, characterized in that 0.1 to 2.5 mol-% of the aromatic monohalogen compounds corresponding to formula (IV) and 0.1 to 2.5 mol-% of the thiol compound corresponding to formula (V) are used.

3. A process as claimed in claim 1, characterized in that the reactants and the polar solvent are combined and reacted individually or in the form of mixtures or solutions at tmeperatures of ≥ 200°C with simultaneous removal of water.

4. A process as claimed in claim 1, characterized in that the reaction is carried out in the absence of water.

5. A process as claimed in claim 1, characterized in that 0.05 to 2.5 mol-% of the aromatic monohalogen compounds corresponding to formula IV and 0.05 to 1.5 mol-% of the thiol compound corresponding to formula V are used.

6. A process as claimed in claim 1, characterized in that the aromatic monohalogen compound is 4-chlorodiphenyl sulfone and the mercapto compound corresponding to formula V is 2-mercaptobenzimidazole or 2-mercaptobenzthiazole.

7. A process as claimed in claim 1, characterized in the aromatic monohalogen compound IV is 4-chlorodiphenyl sulfone and the thiol compound V is thiophenol.

8. A process as claimed in claim 1, characterized in that the aromatic monohalogen compound IV is 4-chlorodiphenyl sulfone and the thiol compound V is dodecyl mercaptan.

9. A process as claimed in claim 1, characterized in that N-methyl caprolactam is used as the polar solvent.